Europäisches Patentamt

European Patent Office

Office européen des brevets

(11) Veröffentlichungsnummer: **0 219 172 B1**

## (12) EUROPÄISCHE PATENTSCHRIFT

(45) Veröffentlichungstag der Patentschrift: **15.04.92**

(21) Anmeldenummer: **86201768.8**

(22) Anmeldetag: **13.10.86**

(51) Int. Cl.⁵: **D06F 33/02**, A47L 15/46, H01H 9/16, G05B 19/10

(54) Anzeigevorrichtung für ein programmgesteuertes Haushaltsgerät, insbesondere für eine Wasch- oder Geschirrspülmaschine bzw. einen Wäschetrockner.

(30) Priorität: **16.10.85 DE 3536776**

(43) Veröffentlichungstag der Anmeldung:
**22.04.87 Patentblatt 87/17**

(45) Bekanntmachung des Hinweises auf die Patenterteilung:
**15.04.92 Patentblatt 92/16**

(84) Benannte Vertragsstaaten:
**DE ES FR GB IT SE**

(56) Entgegenhaltungen:
**DE-A- 1 907 725**
**FR-A- 2 210 319**

(73) Patentinhaber: **Bauknecht Hausgeräte GmbH Am Wallgraben 99 W-7000 Stuttgart 80(DE)**

(84) Benannte Vertragsstaaten:
**DE**

(73) Patentinhaber: **WHIRLPOOL INTERNATIONAL B.V. Tarwelaan 58 NL-5632 KG Eindhoven(NL)**

(84) Benannte Vertragsstaaten:
**ES FR GB IT SE**

(72) Erfinder: **Schäfer, Rainer Ulrichstrasse 18 W-7024 Filderstadt 1(DE)**

(74) Vertreter: **Meier, Friedrich, Dipl.-Ing. et al Philips Patentverwaltung GmbH Wendenstrasse 35 Postfach 10 51 49 W-2000 Hamburg 1(DE)**

EP 0 219 172 B1

**Beschreibung**

Die Erfindung bezieht sich auf eine Vorrichtung zur Anzeige des gewählten Programmes und des Programmablaufes eines programmgesteuerten Haushaltsgerätes, insbesondere einer Wasch- oder Geschirrspülmaschine bzw. eines Wäschetrockners mit einem auf der Achse eines Programmschaltwerkes sitzenden Drehknopf zur Programmwahl, der eine feststehende Anzeige des gewählten Programmes bewirkt, und mit einer vom Programmschaltwerk angetriebenen Programmablaufscheibe, die hinter einer Blende mit Programmablauffenstern umläuft, und mit Markierungen versehen ist, die während des Programmablaufes durch die Programmablauffenster hindurch den jeweils ablaufenden Programmschritt anzeigen.

Aus der DE-AS 19 07 725 ist eine Vorrichtung zur Anzeige des gewählten Programmes und des Programmablaufes einer programmgesteuerten Wasch- oder Geschirrspülmaschine mit einem Drehknopf bekannt, der auf einer Welle eines Programmschaltwerkes sitzt und mit dessen Hilfe eines der im Programmschaltwerk gespeicherten Programme einstellbar ist. Hierzu wird der Drehknopf soweit gedreht, bis eine am Drehknopf angebrachte Spitze auf die dem ausgewählten Programm entsprechende Markierung zeigt. Bei Ablauf des Programmes verbleibt der Drehknopf dann in dieser Position. Beim Einstellen des Programmes wird vom Drehknopf eine hinter einer Blende angeordnete Programmablaufscheibe mit einem Zeiger mitgenommen, der bei Ablauf des Programmes mitläuft und jeweils auf eine dem gerade ablaufenden Programmschritt entsprechende Markierung zeigt. Hierbei sind sowohl die Markierungen für die wählbaren Programme und die ablaufenden Programmschritte als auch die Spitze des Drehknopfes und der Zeiger so eng nebeneinander angeordnet, daß ohne zusätzliche Erläuterung nicht erkennbar ist, auf welche Markierungen der Zeiger und auf welche Markierungen die Spitze des Drehknopfes zeigen, so daß sich hierbei Ablesefehler ergeben können.

Durch die FR-A-2 210 319 ist ein Programmanzeiger für eine Maschine bekanntgeworden, bei dem lediglich der Programmablauf, d.h. die einzelnen Programmschritte angezeigt werden. Über eine zusätzliche Anzeige des gerade gewählten Programmes ist nichts erkennbar. Die bekannte Bauart zeigt lediglich einen mit Markierungen für die einzelnen Programmschritte der Maschine versehenen Schwinghebel. Dieser Schwinghebel arbeitet über eine Nase mit einer Nockenscheibe zusammen, die synchron mit dem Programmablauf umläuft. Dabei wird dann jeweils in einem einzigen Fenster der gerade ablaufende Programmschritt angezeigt.

Der Erfindung liegt die Aufgabe zugrunde, eine Vorrichtung der eingangs genannten Art zu schaffen, bei der mit einfachen Mitteln die Übersichtlichkeit bei der Ablesung des eingestellten Programmes einerseits und des gerade ablaufenden Programmschrittes andererseits erhöht wird und somit die Fehlermöglichkeiten beim Ablesen verringert werden.

Diese Aufgabe wird gemäß der Erfindung dadurch gelöst,

a) daß die Achse eine mit der Programmablaufscheibe zusammenwirkende Zahnscheibe und eine mit dem freien Ende eines Schwinghebels zusammenwirkende Kurvenscheibe aufweist,

b) daß der von der Kurvenscheibe verstellbare Schwinghebel für jedes gewählte Programm eine Markierung aufweist, der jeweils ein Programmanzeigefenster in der Blende zugeordnet ist und

c) daß der Schwinghebel in jeder einem gewählten Programm enstprechenden Schwenkposition arretierbar ist.

Diese Bauart geht im Vergleich zu der bekannten Bauart gemäß der DE-OS 1 907 725 einen anderen Weg, bei welchem die kreisförmige Anzeigevorrichtung verlassen wird und stattdessen die Anzeige des gewählten Programmes einerseits und die Anzeige des gerade ablaufenden Programmschrittes andererseits örtlich getrennt sind. Damit ist ein Ablesefehler praktisch ausgeschlossen, da für die ablesende Person eine klare, übersichtliche Trennung zwischen der Anzeige des gewählten Programmes einerseits und der Anzeige des gerade ablaufenden Programmschrittes andererseits geschaffen ist. Der mit den Markierungen versehene Schwinghebel, der mit einer Kurvenfläche der Kurvenscheibe in Berührung steht, kann mittels dieser Kurvenscheibe auf einfache Weise in diejenige Schwingposition gebracht werden, bei der die dem gewählten Programm entsprechende Markierung hinter einem Programmanzeigefenster erscheint.

Die Übersichtlichkeit und gute Ablesbarkeit kann noch dadurch erhöht werden, daß in einer Ausgestaltung der Erfindung die jeweiligen Anzeigemarkierungen, d.h. die Programmanzeige- und Programmablauffenster, auf einer geraden, waagerechten Linie angeordnet sind.

Um den Schwinghebel durch Betätigen einer entfernt angeordneten Starttaste arretieren zu können, ist es vorteilhaft, wenn der Schwinghebel an seiner Vorderseite mit Aussparungen versehen ist, in die ein in einem Bowdenzug geführter Draht in jeder einem wählbaren Programm entsprechenden Schwenkposition arretierend eingreifbar ist.

Ein Ausführungsbeispiel der Erfindung wird im folgenden anhand der Zeichnungen beschrieben. Es zeigen

Fig. 1 eine Blende mit auf einer Linie liegenden Programmanzeige- und Programmablauffenster,

Fig. 2 einen Schwinghebel und eine Programmablaufscheibe, auf denen Markierungen angebracht sind,

Fig. 3 eine mit dem Schwinghebel in Berührung stehende Kurvenscheibe.

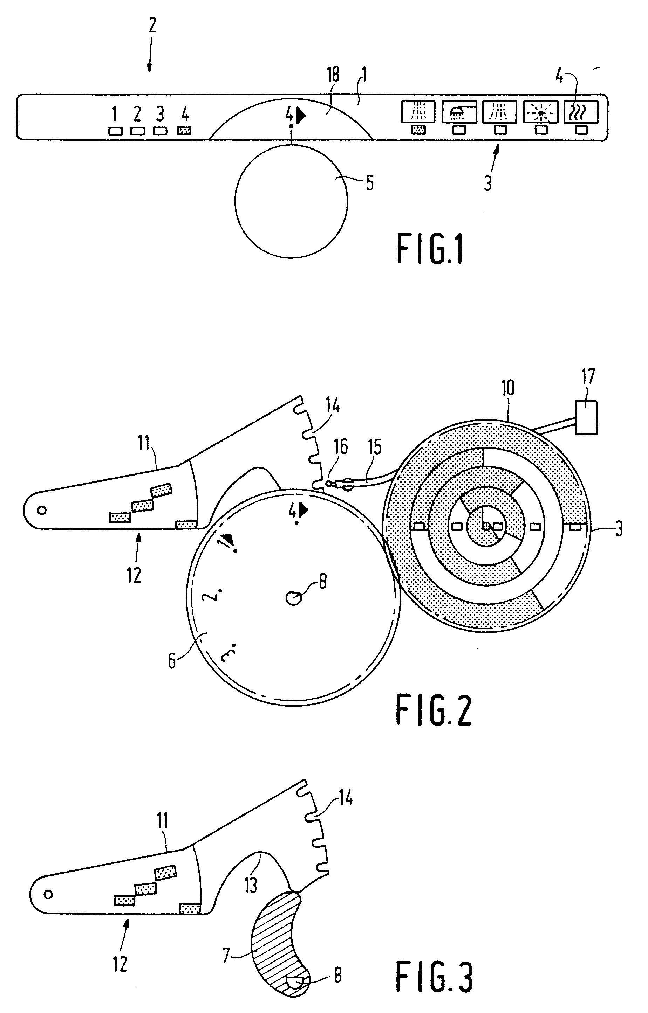

Die Anzeigevorrichtung weist eine in Fig. 1 dargestellte Blende 1 mit vier Programmanzeigefenster 2 und fünf Programmablauffenster 3 auf. Die Blende kann als Lochblende mit lochförmigen Fenstern oder als Glasscheibe, vorzugsweise als Plexiglasscheibe ausgebildet sein, welche bis auf die Fenster mit einer Farbschicht bedeckt ist. Diese Fenster liegen auf einer geraden, waagerechten Linie. Über den Programmanzeigefenstern 2 sind Zahlen angebracht, die anzeigen, welches Programm gerade eingestellt wurde, wenn in dem Fenster unter der entsprechenden Zahl eine Markierung erscheint.

Über den Programmablauffenstern 3 sind Symbole 4 angebracht, die den einzelnen Programmschritten zugeordnet sind. Erscheint hinter einem Programmablauffenster 3 eine Markierung, wird angezeigt, daß der dem darüber angebrachten Symbol 4 entsprechende Programmschritt ausgeführt wird. Nahe den Programmablauf- und Programmanzeigefenstern 2 und 3 ist ein im Uhrzeigersinn drehbarer Drehknopf 5 zum Einstellen der Programme angeordnet. Der Drehknopf 5 sitzt gemeinsam mit einer in Fig. 2 dargestellten Zahnscheibe 6 und einer dahinter angeordneten und in Fig. 3 dargestellten Kurvenscheibe 7 auf einer Achse 8 eines in den Figuren nicht dargestellten Programmschaltwerkes. Hierbei kann die Achse 8 die Drehachse einer Programmnoppenscheibe sein, die Teil eines beispielsweise aus der DE-AS 19 07 725 bekannten Programmschaltwerkes ist.

Auf der in Fig. 2 dargestellten Zahnscheibe 6 sind Zahlen angebracht, die, wie Fig. 1 zeigt, hinter einem kreissegmentförmigen Fenster 18 der Blende 1 sichtbar sind und anzeigen, welches Programm gerade eingestellt ist. Bei Programmablauf dreht sich die Achse 8 und damit auch die Zahnscheibe 6 im Uhrzeigersinn, so daß die dem eingestellten Programm entsprechende Zahl hinter der Blende 1 verschwindet, während die dem eingestellten Programm entsprechende Markierung hinter dem Programmanzeigefenster 2 sichtbar bleibt.

Die Zahnscheibe 6 steht mit der Verzahnung einer mit kreisförmigen Markierungen versehenen Programmablaufscheibe 10 in Eingriff, die hinter den Programmablauffenstern 3 angeordnet ist und die sich, angetrieben von der Zahnscheibe 6, bei Programmablauf gegen den Uhrzeigersinn dreht. Die Programmablauffenster 3 sind in Fig. 2 andeutungsweise eingezeichnet. Weiterhin ist in Fig. 2 der Schwinghebel 11 dargestellt, der für jedes wählbare Programm eine Markierung 12 aufweist, die nach Einstellung des Programms hinter dem entsprechenden Programmanzeigefenster 2 sichtbar ist. An der schwenkbaren Seite des Schwinghebels 11 sind Aussparungen 14 angebracht, in die ein in einem Bowdenzug 15 geführter Draht 16 eingreifen kann, um den Schwinghebel 11 zu arretieren. Diese Arretierung wird durch Betätigung eines Startknopfes 17 ausgelöst, durch den gleichzeitig das eingestellte Programm gestartet wird.

Die in Fig. 3 dargestellte Kurvenscheibe 7 steht mit dem Schwinghebel 11 in Berührung, der eine Ausnehmung 13 aufweist, in welche die sich bei Programmablauf im Uhrzeigersinn drehende Kurvenscheibe 7 einlaufen kann, ohne daß deren Drehbewegung vom Schwinghebel 11 vorzeitig blockiert wird.

Zum Einstellen eines Programmes wird der Drehknopf 5 soweit im Uhrzeigersinn gedreht, bis hinter dem Fenster 18 die Zahl des einzustellenden Programmes erscheint. Hierbei dreht sich auch die Kurvenscheibe 7 im Uhrzeigersinn, so daß der damit in Berührung stehende Schwinghebel 11 eine Schwenkbewegung im Uhrzeigersinn ausführt. Dadurch erscheint eine der Markierungen 12 hinter demjenigen Programmanzeigefenster 2, das dem eingestellten Programm entspricht. Bei der Einstellung des Programmes wird über die Zahnscheibe 6 auch die Programmablaufscheibe 10 verdreht, so daß hinter demjenigen Programmablauffenster 3 eine Markierung erscheint, das dem ersten Programmschritt des gewählten Programmes entspricht. Im vorliegenden Ausführungsbeispiel ist das Programm 4 eingestellt, so daß im Fenster 18 die Zahl 4 und hinter dem vierten Programmanzeigefenster 2 eine Markierung sichtbar ist.

Zum Starten des eingestellten Programmes wird die Starttaste 17 gedrückt. Hierdurch wird das Drahtende 16 in eine der Aussparungen 14 geschoben und damit der Schwinghebel 11 in der dem eingestellten Programm entsprechenden Schwenkposition arretiert. Die entsprechende Markierung 12 bleibt bei Ablauf dieses Programmes somit hinter dem Programmanzeigefenster 2 sichtbar. Bei Programmablauf dreht sich die Achse 8, so daß sich auch die Kurvenscheibe 7 im Uhrzeigersinn dreht und sich dabei deren Nase vom Schwinghebel 11 entfernt.

Außerdem dreht sich hierbei angetrieben von der Achse 8 auch die Zahnscheibe 6 im Uhrzeigersinn, so daß sich die hiervon angetriebene Programmablaufscheibe 10 gegen den Uhrzeigersinn dreht und hinter den Programmablauffenstern 3 Markierungen erscheinen, die angeben, welcher Programmschritt gerade abläuft.

**Patentansprüche**

**1.** Vorrichtung zur Anzeige des gewählten Programms und des Programmablaufes eines programmgesteuerten Haushaltgerätes, insbesondere einer Wasch- oder Geschirrspülmaschine bzw. eines Wäschetrockners, mit einem auf der Achse (8) eines Programmschaltwerkes sitzenden Drehknopf (5) zur Programmwahl, der eine feststehende Anzeige des gewählten Programms bewirkt, und mit einer vom Programmschaltwerk angetriebenen Programmablaufscheibe (10), die hinter einer Blende (1) mit Programmablauffensterm (3) umläuft und mit Markierungen versehen ist, die während des Programmablaufes durch die Programmablauffenster (3) hindurch den jeweils auflaufenden Programmschritt anzeigen, dadurch gekennzeichnet,

a) daß die Achse (8) eine mit der Programmablaufscheibe (10) zusammenwirkende Zahnscheibe (6) und eine mit dem freien Ende eines Schwinghebels (11) zusammenwirkende Kurvenscheibe (7) aufweist,

b) daß der von der Kurvenscheibe (7) verstellbare Schwinghebel (11) für jedes gewählte Programm eine Markierung (12) aufweist, der jeweils ein Programmanzeigefenster (23) in der Blende (1) zugeordnet ist, und

c) daß der Schwinghebel (11) in jeder einem gewählten Programm entsprechenden Schwenkposition arretierbar ist.

2. Vorrichtung nach Anspruch 1, dadurch gekennzeichnet, daß die Programmanzeige- und Programmablauffenster (2,3) auf einer geraden, waagerechten Linie angeordnet sind.

3. Vorrichtung nach Anspruch 1 oder 2, dadurch gekennzeichzeichnet, daß der Schwinghebel (11) an seiner Vorderseite mit Aussparungen (14) versehen ist, in die ein in einem Bowdenzug (15) geführter Draht (16) in jeder einem wählbaren Programm entsprechenden Schwenkposition arretierend eingreifbar ist.

## Claims

1. A device for indicating the selected program and the progress of a program in a program-controlled household appliance, in particular a laundry-washing or dish-washing machine or a laundry dryer, the device comprising a rotary knob (5) for program selection mounted on a spindle (8) and providing a fixed indication of the selected program, and a program disc (10) which is driven by the programming device and rotates behind a panel (1) with program sequence windows (3), which program disc has marks indicating the program step in progress through the program sequence windows (3) as the program proceeds, characterised in that

a) the spindle (8) carries a toothed disc (6) cooperating with the program disc (10) and a cam disc (7) cooperating with the free end of a swing lever (11),

b) for each selected program the swing lever (11), which is movable by the cam disc (7), has a mark (12) which is associated with a program indication window (23) in the panel (1), and

c) the swing lever (11) can be locked in each pivotal position corresponding to a selected program.

2. A device as claimed in Claim 1, characterised in that the program indication and program sequence windows (2, 3) are disposed on a straight horizontal line.

3. A device as claimed in Claim 1 or 2, characterised in that at its front the swing lever (11) has recesses (14) in which a wire (16) guided in a Bowden cable (15) is engageable to provide locking in each pivotal position corresponding to a program which can be selected.

## Revendications

1. Dispositif indicateur pour indiquer le programme choisi et le déroulement d'un programme d'un appareil électroménager commandé par programme, notamment un lave-linge, un lave-vaisselle ou un sèche-linge, et muni d'un bouton de commande rotatif (5) placé sur l'arbre (8) d'un programmateur et permettant de choisir le programme, bouton qui provoque une indication fixe du programme choisi, et d'un disque de déroulement de programme (10) entraîné par le programmateur et tournant derrière un tableau (1) présentant des fenêtres de déroulement de programme (3), disque qui est pourvu de marques qui, au cours du déroulement du programme, à travers les fenêtres de déroulement de programme (3), indiquent l'étape de programme dont l'exécution est en cours, caractérisé en ce que

a) l'arbre (8) est muni d'un disque denté (6) coopérant avec le disque de déroulement de programme (10) et d'une came (7) coopérant avec l'extrémité libre d'un levier oscillant (11),

b) le levier oscillant (11), pouvant être déplacé par le disque à came (7), présente pour chaque programme choisi une marque (12) à laquelle est associée une fenêtre d'indication (23) de programme individuelle ménagée dans le tableau (1) et

c) le levier oscillant (11) peut être bloqué dans chaque position de pivotement correspondant à un programme choisi.

2. Dispositif selon la revendication 1, caractérisé en ce que les fenêtres d'indication de programme (2) et de déroulement de programme (3) sont situées sur une ligne droite horizontale.

3. Dispositif selon la revendication 1 ou 2, caractérisé en ce que le levier oscillant (11) présente sur sa face avant des évidements (14) dans lesquels, dans chaque position de pivotement correspondant à un programme disponible, peut s'engager le fil (16) d'un câble Bowden (15) de façon à assurer le blocage.

FIG.1

FIG.2

FIG.3